# EUROPÄISCHE PATENTSCHRIFT

(11) **EP 3 662 576 B1**
(45) Veröffentlichungstag und Bekanntmachung des Hinweises auf die Patenterteilung: **23.02.2022**
(21) Anmeldenummer: 18729861.7
(22) Anmeldetag: 01.06.2018
(51) Int. Cl.: H02S 40/44, F24S 40/58, F24S 50/40

(54) **VERFAHREN ZUM BETRIEB EINER HYBRIDKOLLEKTOR-SOLARANLAGE**
METHOD FOR OPERATING A HYBRID COLLECTOR SOLAR SYSTEM
PROCÉDÉ SERVANT À FAIRE FONCTIONNER UNE INSTALLATION SOLAIRE À CAPTEUR HYBRIDE

(30) Priorität: 02.06.2017 CH 7102017
(43) Veröffentlichungstag der Anmeldung: 10.06.2020
(73) Patentinhaber: SOBLUE AG, 8008 Zürich (CH)
(72) Erfinder: RAMANI, Dritan, 8008 Zürich (CH)
(74) Vertreter: Riederer Hasler & Partner Patentanwälte AG
(86) Internationale Anmeldenummer: PCT/CH2018/050018
(87) Internationale Veröffentlichungsnummer: WO 2018/218377

(56) Entgegenhaltungen:
- EP-A1- 0 031 153
- DE-A1- 4 306 409
- DE-A1-102006 003 802
- DE-U1-202014 105 092

## Beschreibung

### Gebiet der Erfindung

Die Erfindung betrifft ein Verfahren zum Betrieb einer Hybridkollektor-Solaranlage gemäss Oberbegriff des Anspruchs 1 und eine Hybridkollektor-Solaranlage zur Durchführung des Verfahrens gemäss Oberbegriff des Anspruchs 11.

### Stand der Technik

Aus dem Stand der Technik (DE 10 2006 003802 A1, DE 43 06 409 A1, EP 0 031 153 A1, DE 20 2014 105092 U1) sind Hybridkollektoren bekannt, welche das Sonnenlicht effizienter nutzen, als ein Photovoltaikmodul oder ein thermischer Solarkollektor (auch als Sonnenkollektor oder Flachkollektor bezeichnet) alleine. Bei Photovoltaikmodulen (PV-Modulen) gilt generell, dass deren Leistung mit steigender Temperatur abnimmt. Es wird daher versucht die Temperatur der PV-Module möglichst niedrig zu halten. Der synergistische Effekt bei Hybridkollektoren besteht nun darin, dass bei diesen Kollektoren Wärmetauscher vorgesehen sind, welche die PV-Module kühlen. Die über den Wärmeträger abgeführte Wärme kann beispielsweise für Warmwasserzwecke, Heizungsunterstützung oder Wärmepumpenunterstützung verwendet werden. Der Gesamtwirkungsgrad von Hybridkollektoren ist demnach höher als die Wirkungsgrade eines PV-Moduls oder eines Solarkollektors alleine.

Der Hybridkollektor ist in einen Heizkreislauf integriert, in_dem ein Wärmeträgermedium ständig zirkuliert. In den Heizkreislauf sind weiterhin ein Pufferspeicher und eine Pumpe eingebunden. Der Heizkreislauf ist vollständig mit dem Wärmeträgermedium gefüllt. Das Wärmeträgermedium wird durch die Zirkulation ständig erwärmt. In dem geschlossenen Kreislauf können sich jedoch Drücke bis zu 6 bar aufbauen. Die Solaranlage muss daher dementsprechend ausgelegt und dimensioniert werden, um diesen Drücken standhalten zu können. Dies führt zwangsläufig zu hohen Investitionskosten. Auch kommt es immer wieder zu Leckagen und einem damit verbundenen erhöhten Wartungsaufwand. Ferner können sich in dem thermischen Solarkollektor durch das fortwährende Durchströmen mit dem Wärmeträgermedium Totzonen bilden. D.h. an bestimmten Stellen innerhalb des thermischen Solarkollektors wird das Wärmeträgermedium nicht ausgetauscht. Dies reduziert den Wirkungsgrad der Solaranlagen und kann sogar zu Hotspots führen.

### Aufgabe der Erfindung

Aus den Nachteilen des beschriebenen Stands der Technik resultiert die die vorliegende Erfindung initiierende Aufgabe ein gattungsgemässes Verfahren zum Betrieb einer Hybridkollektor-Solaranlage dahingehend zu verbessern, dass die Investitions- und Wartungskosten der Solaranlage reduziert werden und deren Wirkungsgrad im Betrieb gleichzeitig verbessert wird.

### Beschreibung

Die Lösung der gestellten Aufgabe gelingt bei einem Verfahren zum Betrieb einer Hybridkollektor-Solaranlage gemäss dem Oberbegriff des Anspruchs 1 dadurch, dass die Solaranlage teilweise mit Wärmeträgermedium befüllt wird, sodass ein Teil der Solaranlage unbefüllt ist und dass das Wärmeträgermedium in Abhängigkeit von seiner Temperatur zwischen dem thermischen Solarkollektor und dem Pufferspeicher über die Zuleitung hin und her bewegt wird, wodurch eine pendelnde Betriebsweise realisiert ist.

Dadurch, dass die Solaranlage lediglich teilweise mit Wärmeträgermedium befüllt ist, bleibt ausreichend Raum frei, damit sich das Wärmeträgermedium bei Erwärmung frei ausdehnen kann ohne einen Druck in der Solaranlage aufzubauen. Dies ist besonders bei Hybridkollektoren von Vorteil, da diese druckempfindliche Glasplatten aufweisen können.

Dadurch, dass die Solaranlage teilbefüllt ist, ist in der Solaranlage Raum vorhanden, um das Wärmeträgermedium zwischen dem Pufferspeicher und dem thermischen Solarkollektor hin und her bewegen zu können. Diese pendelnde Betriebsweise führt zu einem überraschend hohen Wirkungsgrad, da die auf das Wärmeträgermedium übertragene Sonnenwärme in Summe nahezu gleich gross ist, als bei einem Wärmeträgermedium, das kontinuierlich im Kreis geführt wird. Ausserdem ist der Energiebedarf der Pumpe im Vergleich zu einer zirkulierenden Betriebsweise reduziert, da die Pumpe lediglich in definierten Zeitintervallen das Wärmeträgermedium von dem Pufferspeicher in den thermischen Solarkollektor pumpt und die restliche Betriebszeit stillsteht.

Die Erfindung zeichnet sich bevorzugt dadurch aus, dass sich das Wärmeträgermedium in einem ersten Betriebszustand im Wesentlichen in dem Pufferspeicher befindet und in einem zweiten Betriebszustand sich im Wesentlichen in dem thermischen Solarkollektor befindet. Die zwei Betriebszustände ermöglichen es, dass das gesamte Wärmeträgermedium entweder in dem Solarkollektor aufgeheizt wird oder ihm in dem Pufferspeicher Wärme entzogen wird. Die pendelnde Betriebsweise ist insbesondere in Kombination mit Hybridkollektoren sehr effizient, da es eine der Aufgaben des thermischen Solarkollektors ist das PV-Modul zu kühlen. Da in dem zweiten Betriebszustand gut gekühltes Wärmeträgermedium mit dem PV-Modul in Kontakt kommt, ist das treibende Temperaturgefälle besonders hoch.

In einer besonders bevorzugten Ausführungsform der Erfindung wird das Wärmeträgermedium mit der Pumpe von dem ersten Betriebszustand in den zweiten Betriebszustand über die Zuleitung gepumpt. Die Pumpe kann dadurch sehr energiesparend eingesetzt werden, da sie die übrige Zeit während dem Betrieb der Solaranlage stillstehen kann. Im Gegensatz dazu läuft die Pumpe bei zirkulierender Betriebsweise einer Solaranlage kontinuierlich.

In einer weiteren bevorzugten Ausführungsform der Erfindung wird das Wärmeträgermedium von dem zweiten Betriebszustand in den ersten Betriebszustand durch Entleerung des thermischen Solarkollektors über die Zuleitung übergeführt. Die Entleerung bedarf daher keiner zusätzlichen Energie. Die Selbstentleerung kann dadurch realisiert werden, dass die Zuleitung am tiefsten Punkt des thermischen Solarkollektors angeordnet ist und der höchste Punkt des Pufferspeichers tiefer als der tiefste Punkt des Solarkollektors angeordnet ist.

Als zweckdienlich hat es sich erwiesen, wenn das Wärmeträgermedium in Abhängigkeit von seiner Temperatur über die Zuleitung in den thermischen Solarkollektor gepumpt wird oder über die Zuleitung in den Pufferspeicher übergeführt wird. Die Zuleitung kann durch die vorliegende Betriebsweise zum Zuleiten und Ableiten des Wärmeträgermediums genutzt werden. Auf zusätzliche Leitungen kann daher verzichtet werden.

Zweckmässigerweise steht die Pumpe unabhängig von dem ersten und dem zweiten Betriebszustand im Kontakt mit dem Wärmeträgermedium. Dadurch ist verhindert, dass die Pumpe trocken läuft. Diese wartungstechnische Anforderung ist einfach zu realisieren, indem die Pumpe tiefer angeordnet ist als der höchste Punkt des sich in dem Pufferspeicher befindenden Wärmeträgermediums.

Als zweckdienlich erweist es sich, wenn das Wärmeträgermedium über eine Bypass-Leitung, welche die Pumpe umgeht, von dem thermischen Solarkollektor in den Pufferspeicher übergeführt wird. Dadurch kann durch einfaches Öffnen eines Ventils der Solarkollektor entleert werden. Die Pumpe wird für die Entleerung nicht benötigt.

Die Erfindung zeichnet sich auch bevorzugt dadurch aus, dass das Verfahren frei von einer Kreislaufbewegung des Wärmeträgermediums ist, indem das Wärmeträgermedium über die Zuleitung zwischen dem thermischen Solarkollektor und dem Pufferspeicher pendelnd hin und her geführt wird. Die Anlage kann daher drucklos betrieben werden. Die Bildung von Totzonen ist zuverlässig verhindert, da der Solarkollektor beim Wechsel auf den ersten Betriebszustand vollständig entleert wird.

Zweckmässigerweise wird die Hybridkollektor-Solaranlage drucklos betrieben, was wie bereits weiter oben ausgeführt, besonders für Hybridkollektoren grosse Vorteile mit sich bringt.

Von Vorteil ist es, wenn in dem zweiten Betriebszustand ein Restvolumen an Wärmeträgermedium in dem Pufferspeicher verbleibt. Dadurch läuft die Pumpe nicht Gefahr trocken zu laufen. Das Restvolumen in dem Pufferspeicher kann auch durch den Überlauf gebildet sein, welcher entsteht, wenn sich das Wärmeträgermedium in dem Solarkollektor ausdehnt.

Ein weiterer Aspekt der Erfindung betrifft auch eine Hybridkollektor-Solaranlage zur Durchführung des oben beschriebenen Verfahrens. Besonders bevorzugt ist es, wenn das Fassungsvolumen der Solaranlage für das Wärmeträgermedium wenigstens doppelt so gross ist wie das Volumen des eingefüllten Wärmeträgermediums. Diese Dimensionierung der Solaranlage führt dazu, dass sich die pendelnde Betriebsweise realisieren lässt. Das Wärmeträgermedium befindet sich nahezu vollständig entweder in dem thermischen Solarkollektor oder in dem Pufferspeicher. Die Aufheizphase und die Wärmeentnahmephase sind daher voneinander getrennt und erfolgen sequentiell.

Zweckmässigerweise ist das Volumen der Solaranlage, welches frei von dem Wärmeträgermedium ist, mit Luft befüllt. Dadurch kann sich das Wärmeträgermedium in dem Solarkollektor ausdehnen, ohne dass sich in der Solaranlage ein Druck aufbauen würde.

In einer bevorzugten Ausführungsform der Erfindung besitzt das Füllvolumen des Pufferspeichers mindestens das Volumen des aufgeheizten Wärmeträgermediums. Dadurch kann in dem ersten Betriebszustand das Wärmeträgermedium vollständig in dem Pufferspeicher aufgenommen werden, wo dem gesamten Wärmeträgermedium die Wärme entzogen wird.

In einer weiteren bevorzugten Ausführungsform der Erfindung besitzt das Füllvolumen des thermischen Solarkollektors höchstens das Volumen des abgekühlten Wärmeträgermediums. Dadurch ist sichergestellt, dass der Solarkollektor in dem zweiten Betriebszustand vollständig mit dem Wärmeträgermedium gefüllt ist und das gesamte Wärmeträgermedium aufgeheizt wird.

Zweckmässigerweise ist der thermische Solarkollektor durch die Zuleitung und eine Überströmleitung mit dem Pufferspeicher verbunden. Die Überströmleitung dient dazu sich während des zweiten Betriebszustandes ausdehnendes Wärmeträgermedium, welches in dem Solarkollektor keinen Platz findet, in den Pufferspeicher zurückzuführen. Die Rückführung des Wärmeträgermediums nach Abschluss des zweiten Betriebszustandes erfolgt selbsttätig über die Zuleitung.

In einer weiteren besonders bevorzugten Ausführungsform der Erfindung ist der thermische Solarkollektor selbstentleerend. Es bedarf keiner zusätzlichen Energie, den Solarkollektor vollständig zu entleeren und den Pufferspeicher zu füllen.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Hybridkollektor-Solaranlage in einem ersten Betriebszustand;
- Figur 2:: die Solaranlage in einem zweiten Betriebszustand und
- Figur 3:: die Solaranlage nach der Rückkehr des Wärmeträgermediums in den ersten Betriebszustand;

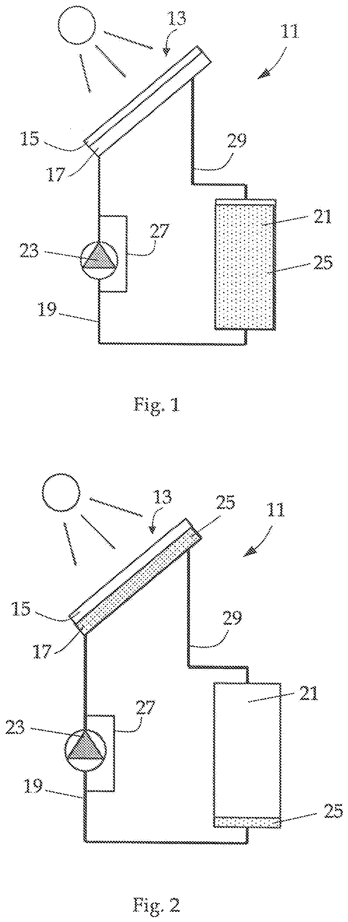

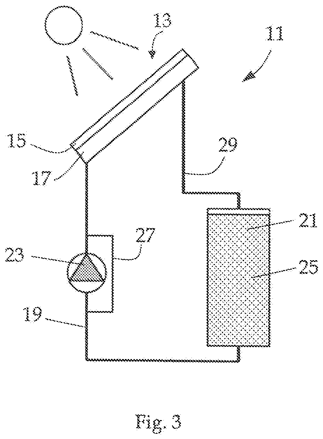

In den Figuren 1 bis 3 ist eine Hybridkollektor-Solaranlage gezeigt, welche gesamthaft mit dem Bezugszeichen 11 beziffert ist. Herzstück der Solaranlage ist ein Hybridkollektor 13. Der Hybridkollektor 13 umfasst ein Photovoltaikmodul (PV-Modul) 15, welches auf einem thermischen Solarkollektor 17 angeordnet ist. Bevorzugt umfasst das PV-Modul 15 mehrere Solarzellen, welche zwischen zwei Glasplatten gehalten sind. Der thermische Solarkollektor 17 ist bevorzugt dadurch gebildet, dass eine Dichtung zwischen dem PV-Modul 15 und einer Platte komprimiert ist und die Dichtung die Platte von dem PV-Modul 15 beabstandet. Die Platte ist mit Klammern, Zwingen oder Schrauben an dem PV-Modul 15 gehalten. Der Hybridkollektor 13 ist über eine Zuleitung 19 mit einem Pufferspeicher 21 fluidleitend verbunden. In die Zuleitung 19 ist eine Pumpe 23 integriert, welche ein Wärmeträgermedium 25 von dem Pufferspeicher 21 in den thermischen Solarkollektor 17 pumpen kann.

Die Solaranlage 11 ist nicht vollständig mit dem Wärmeträgermedium 25 befüllt, sondern ein Teil der Solaranlage ist unbefüllt. Das Füllvolumen des Wärmeträgermediums 25 ist wenigstens so gross wie das Volumen des thermischen Solarkollektors 17. Dadurch ist sichergestellt, dass der thermische Solarkollektor 17 vollständig mit dem Wärmeträgermedium 25 befüllbar ist und möglichst viel Wärme auf das Wärmeträgermedium übergehen kann.

In Figur 1 ist ein erster Betriebszustand gezeigt, in welchem sich das Wärmeträgermedium 25 in dem Pufferspeicher 21 befindet. Die in dem Solarkollektor 17 aufgenommene Wärme wird dem Wärmeträgermedium 25 in dem Pufferspeicher 21 entzogen, beispielsweise durch einen in den Pufferspeicher 21 integrierten Wärmetauscher. Das Füllvolumen des Pufferspeichers 21 ist derart bemessen, dass das aufgeheizte Wärmeträgermedium 25, wenn es seine maximale Ausdehnung besitzt, in dem Pufferspeicher Platz findet. Dadurch, dass das Wärmeträgermedium 25 vollständig in dem Pufferspeicher 21 aufgenommen wird, kann dem gesamten Wärmeträgermedium 25 in dem Pufferspeicher 21 die Wärme entzogen werden. Zusätzlich muss die Zuleitung 19 bis zur Pumpe 23 mit Wärmeträgermedium 25 befüllt sein, damit die Pumpe 23 nicht trocken läuft und das Wärmeträgermedium 25 ziehen kann. Zweckmässigerweise ist die Pumpe 23 auf einem Niveau angeordnet, welches unter dem Flüssigkeitsspiegel des Wärmeträgermediums 25 im ersten Betriebszustand liegt. Dadurch wird zwangsläufig Wärmeträgermedium 25 bis zur Pumpe 23 gedrückt.

Nachdem dem Wärmeträgermedium 25 in dem Pufferspeicher 21 die Wärme entzogen wurde, wird es mit der Pumpe 23 über die Zuleitung 19 in den thermischen Solarkollektor 17 gepumpt. In dem Solarkollektor 17 verbleibt das Wärmeträgermedium 25 bis eine definierte Temperatur oder ein definiertes Zeitintervall erreicht ist. In diesem zweiten Betriebszustand (Figur 2) ist der thermische Solarkollektor 17 vollständig mit dem Wärmeträgermedium gefüllt. Bevorzugt verbleibt eine kleine Menge an Wärmeträgermedium 25 in dem Pufferspeicher 21, um eine Reserve zu haben. Das gesamte Wärmeträgermedium 25 wird in dem thermischen Solarkollektor 17 durch die Sonneneinstrahlung aufgeheizt, bis die für den Betrieb der Solaranlage 11 notwendige Temperatur erreicht ist.

Die Solaranlage 11 kann drucklos betrieben werden, da diese nicht vollständig mit Wärmeträgermedium 25 gefüllt ist. Das Restvolumen der Solaranlage 11 ist frei von dem Wärmeträgermedium 25 und daher mit Luft befüllt. Dadurch kann sich das Wärmeträgermedium 25 während dem Aufheizen widerstandslos ausdehnen. Dies ist bei einer Hybridkollektor-Solaranlage 11 von besonderem Vorteil, da das Photovoltaikmodul 15 wenigstens eine druckempfindliche Glasplatte umfassen kann.

Die Pumpe 23 ist nicht, wie bei einer zirkulierenden Betriebsweise, bei der das Wärmeträgermedium 25 ständig in einem Kreislauf gepumpt wird, dauerhaft in Betrieb. Vielmehr wird die Pumpe 23 nur dann eingeschaltet, wenn von dem ersten Betriebszustand in den zweiten Betriebszustand gewechselt wird und die Pumpe 23 das Wärmeträgermedium 25 von dem Pufferspeicher 21 in den thermischen Solarkollektor 17 pumpt. Dadurch lässt sich bei dem vorliegenden Verfahren die Pumpe 23 besonders energiesparend betreiben, wodurch der Gesamtwirkungsgrad der Solaranlage 11 verbessert wird.

Im nächsten Schritt wird eine Bypass-Leitung 27 geöffnet, welche die Pumpe 23 umgeht. Dadurch, dass der Solarkollektor 17 höher als der Pufferspeicher 21 und schräg angeordnet ist, entleert sich der Solarkollektor 17 selbsttätig und vollständig. Für die Entleerung des Solarkollektors 17 muss die Pumpe 23 daher nicht in Betrieb genommen werden. Der Pufferspeicher 21 wird durch die Schwerkraft selbsttätig mit dem aufgeheizten Wärmeträgermedium 25 befüllt. Nach der Befüllung des Pufferspeichers 21 kann dem Wärmeträgermedium 25 die Wärme entzogen werden.

Zusätzlich ist der thermische Solarkollektor 17 mit dem Pufferspeicher 21 mit einer Überströmleitung 29 verbunden. Dadurch kann das sich während dem Aufheizen in dem thermischen Solarkollektor ausdehnende Wärmeträgermedium 25 in den Pufferspeicher über die Überströmleitung 29 zurückfliesen. Die Überströmleitung ermöglicht es, dass sich das Wärmeträgermedium 25 ausdehnen kann, ohne dass ein Druck in der Solaranlage 11 aufgebaut wird.

Das vorliegende Verfahren zum Betrieb der Hybridkollektor-Solaranlage 11 ermöglicht es, dass das Wärmeträgermedium 25 zwischen dem thermischen Solarkollektor 17 und dem Pufferspeicher 21 hin und her pendelt. In überraschenderweise hat der Erfinder herausgefunden, dass diese Betriebsweise zu einer Steigerung des Gesamtwirkungsgrades im Vergleich zu einer zirkulierenden Betriebsweise führt. Um die pendelnde Betriebsweise realisieren zu können, ist das Füllvolumen des thermischen Solarkollektors 17 derart dimensioniert, dass es höchstens dem Volumen des abgekühlten Wärmeträgermediums 25 entspricht. Dadurch lässt sich der thermische Solarkollektor 17 immer vollständig mit dem Wärmeträgermedium 25 befüllen. Durch die vollständige Entleerung des thermischen Solarkollektors 17 bei Beendigung des zweiten Betriebszustandes lässt sich die Bildung von Totzonen verhindern, welche sich bei einer zirkulierenden Betriebsweise in einem Solarkollektor häufig bilden.

Das Füllvolumen des Pufferspeichers 21 ist derart dimensioniert, dass es mindestens dem Volumen des aufgeheizten Wärmeträgermediums 25 entspricht. Dadurch lässt sich das gesamte aufgeheizte Wärmeträgermedium 25 in dem Pufferspeicher 21 aufnehmen und kann dort seine Wärme abgeben.

### Legende:

- 11: Hybridkollektor-Solaranlage
- 13: Hybridkollektor
- 15: Photovoltaikmodul
- 17: Thermischer Solarkollektor
- 19: Zuleitung
- 21: Pufferspeicher
- 23: Pumpe
- 25: Wärmeträgermedium
- 27: Bypass-Leitung
- 29: Überströmleitung

## Patentansprüche

1. Verfahren zum Betrieb einer Hybridkollektor-Solaranlage (11) bei dem ein in einem Pufferspeicher (21) vorhandenes Wärmeträgermedium (25) über eine Pumpe (23) in einen thermischen Solarkollektor (17) eines Hybridkollektors (13) zur Erwärmung des Wärmeträgermediums (25) gepumpt wird, wobei die Pumpe (23) in eine Zuleitung (19) eingebunden ist, welche Zuleitung (19) den Pufferspeicher (21) mit dem thermischen Solarkollektor (17) verbindet,
**dadurch gekennzeichnet,**
**dass** die Solaranlage (11) teilweise mit Wärmeträgermedium (25) befüllt wird, sodass ein Teil der Solaranlage (11) unbefüllt ist und
**dass** das Wärmeträgermedium (25) in Abhängigkeit von seiner Temperatur zwischen dem thermischen Solarkollektor (17) und dem Pufferspeicher (21) über die Zuleitung (19) hin und her bewegt wird, wodurch eine pendelnde Betriebsweise realisiert ist.

2. Verfahren nach Anspruch 1, **dadurch gekennzeichnet, dass** sich das Wärmeträgermedium (25) in einem ersten Betriebszustand im Wesentlichen in dem Pufferspeicher (21) befindet und in einem zweiten Betriebszustand sich im Wesentlichen in dem thermischen Solarkollektor (17) befindet.

3. Verfahren nach Anspruch 2, **dadurch gekennzeichnet, dass** das Wärmeträgermedium (25) mit der Pumpe (23) von dem ersten Betriebszustand in den zweiten Betriebszustand über die Zuleitung (19) gepumpt wird.

4. Verfahren nach Anspruch 2 oder 3, **dadurch gekennzeichnet, dass** das Wärmeträgermedium (25) von dem zweiten Betriebszustand in den ersten Betriebszustand durch Entleerung des thermischen Solarkollektors (17) über die Zuleitung (19) übergeführt wird.

5. Verfahren nach einem der vorangehenden Ansprüche, **dadurch gekennzeichnet, dass** das Wärmeträgermedium (25) in Abhängigkeit von seiner Temperatur über die Zuleitung (19) in den thermischen Solarkollektor (17) gepumpt wird oder über die Zuleitung (19) in den Pufferspeicher (21) übergeführt wird.

6. Verfahren nach einem der Ansprüche 2 bis 5, **dadurch gekennzeichnet, dass** die Pumpe (23) unabhängig von dem ersten und dem zweiten Betriebszustand im Kontakt mit dem Wärmeträgermedium (25) steht.

7. Verfahren nach einem der vorangehenden Ansprüche, **dadurch gekennzeichnet, dass** das Wärmeträgermedium (25) über eine Bypass-Leitung (27), welche die Pumpe (23) umgeht, von dem thermischen Solarkollektor (17) in den Pufferspeicher (21) übergeführt wird.

8. Verfahren nach einem der vorangehenden Ansprüche, **dadurch gekennzeichnet, dass** das Verfahren frei von einer Kreislaufbewegung des Wärmeträgermediums (25) ist, indem das Wärmeträgermedium (25) über die Zuleitung (19) zwischen dem thermischen Solarkollektor (17) und dem Pufferspeicher (21) pendelnd hin und her geführt wird.

9. Verfahren nach einem der vorangehenden Ansprüche, **dadurch gekennzeichnet, dass** die Hybridkollektor-Solaranlage (11) drucklos betrieben wird.

10. Verfahren nach einem der vorangehenden Ansprüche, **dadurch gekennzeichnet, dass** in dem zweiten Betriebszustand ein Restvolumen an Wärmeträgermedium (25) in dem Pufferspeicher (21) verbleibt.

11. Hybridkollektor-Solaranlage (11) zur Durchführung des Verfahrens gemäss den Ansprüchen 1 bis 10, umfassend
- einen thermischen Solarkollektor (17),
- ein Photovoltaikmodul (15), wobei das Photovoltaikmodul (15) auf dem thermischen Solarkollektor (17) angeordnet ist und das Photovoltaikmodul (15) und der thermische Solarkollektor (17) zusammen einen Hybridkollektor (13) bilden,
- ein in die Solaranlage (11) gefülltes Wärmeträgermedium (25),
- einen Pufferspeicher (21), welcher mit dem Hybridkollektor (13) über eine Zuleitung (19) fluidleitend verbunden ist
und eine Pumpe (23), welche in die Zuleitung (19) eingebunden ist,
**dadurch gekennzeichnet,**
**dass** das Fassungsvolumen der Solaranlage (11) für das Wärmeträgermedium (25) wenigstens doppelt so gross ist wie das Volumen des eingefüllten Wärmeträgermediums (25).

12. Solaranlage nach Anspruch 11, **dadurch gekennzeichnet, dass** das Volumen der Solaranlage (11), welches frei von dem Wärmeträgermedium (25) ist, mit Luft befüllt ist.

13. Solaranlage nach Anspruch 11 oder 12, **dadurch gekennzeichnet, dass** das Füllvolumen des Pufferspeichers (21) mindestens das Volumen des aufgeheizten Wärmeträgermediums (25) besitzt.

14. Solaranlage nach einem der Ansprüche 11 bis 13, **dadurch gekennzeichnet, dass** das Füllvolumen des thermischen Solarkollektors (17) höchstens das Volumen des abgekühlten Wärmeträgermediums (25) besitzt.

15. Solaranlage nach einem der Ansprüche 11 bis 14, **dadurch gekennzeichnet, dass** der thermische Solarkollektor (17) durch die Zuleitung (19) und eine Überströmleitung (29) mit dem Pufferspeicher (21) verbunden ist.

16. Solaranlage nach einem der Ansprüche 11 bis 15, **dadurch gekennzeichnet, dass** der thermische Solarkollektor (17) selbstentleerend ist.

## Claims

1. A method for operating a hybrid collector solar system (11) in which a heat transfer agent (25) which is present in a buffer accumulator (21) passes via a pump (23) into a thermal solar collector (17) of the hybrid collector in order to heat the heat transfer agent (25), wherein the pump (23) is connected into a feed line (19), which feed line (19) connects the buffer accumulator (21) to the thermal solar collector (17),
**characterized in that**
the solar system (11) is partially filled with heat transfer agent (25) so that part of the solar system (11) is not filled and so that the heat transfer agent (25) is moved back and forth between the thermal solar collector (17) and the buffer accumulator (21) via the feed line (19) in dependence on its temperature, thereby realizing an oscillating method of operation.

2. A method according to claim 1, **characterized in that** the heat transfer agent (25) in a first operating state is basically located in the buffer accumulator (21) and in a second operating state it is located basically in the thermal solar collector (17).

3. A method according to claim 2, **characterized in that** the heat transfer agent (25) is pumped with the pump (23) from the first operating state to the second operating state via the feed line (19).

4. A method according to claim 2 or 3, **characterized in that** the heat transfer agent (25) is transferred from the second operating state to the first operating state by emptying of the thermal solar collector (17) via the feed line (19).

5. A method according to one of the preceding claims, **characterized in that** the heat transfer agent (25) depending on its temperature is pumped via the feed line (19) to the thermal solar collector (17) or taken via the feed line (19) to the buffer accumulator (21).

6. A method according to one of claims 2 to 5, **characterized in that** the pump (23) stands in contact with the heat transfer agent (25) independently of the first and the second operating state.

7. A method according to one of the preceding claims, **characterized in that** the heat transfer agent (25) is taken from the thermal solar collector (17) to the buffer accumulator (21) via a bypass line (27), which bypasses the pump (23).

8. A method according to one of the preceding claims, **characterized in that** the method is free from a circulating movement of the heat transfer agent (25), since the heat transfer agent (25) is taken oscillating back and forth via the feed line (19) between the thermal solar collector (17) and the buffer accumulator (21).

9. A method according to one of the preceding claims, **characterized in that** the hybrid collector solar system (11) is operated pressureless.

10. A method according to one of the preceding claims, **characterized in that** a residual volume of heat transfer agent (25) remains in the buffer accumulator (21) in the second operating state.

11. A hybrid collector solar system (11) to carry out the method according to claims 1 to 10, comprising
- a thermal solar collector (17),
- a photovoltaic module (15), wherein the photovoltaic module (15) is arranged on the thermal solar collector (17) and the photovoltaic module (15) and the thermal solar collector (17) together form a hybrid collector (13),
- a heat transfer agent (25) filled into the solar system (11),
- a buffer accumulator (21), which is in fluidic connection with the hybrid collector (13) via a feed line (19)
and a pump (23), which is connected into the feed line (19),
**characterized in that**
the volume capacity of the solar system (11) for the heat transfer agent (25) is at least twice as large as the volume of the heat transfer agent (25) filled into it.

12. A solar system according to claim 11, **characterized in that** the volume of the solar system (11) free of the heat transfer agent (25) is filled with air.

13. A solar system according to claim 11 or 12, **characterized in that** the fill volume of the buffer accumulator (21) contains at least the volume of the heated heat transfer agent (25).

14. A solar system according to one of claims 11 to 13, **characterized in that** the fill volume of the thermal solar collector (17) at most contains the volume of the cooled-down heat transfer agent (25).

15. A solar system according to one of claims 11 to 14, **characterized in that** the thermal solar collector (17) is connected by the feed line (19) and an overflow line (29) to the buffer accumulator (21).

16. A solar system according to one of claims 11 to 15, **characterized in that** the thermal solar collector (17) is self-emptying.

## Revendications

1. Procédé de fonctionnement d'une installation solaire à collecteur hybride (11) dans laquelle un fluide caloporteur (25) présent dans un ballon tampon (21) est pompé par une pompe (23) dans le collecteur solaire thermique (17) d'un collecteur hybride (13) pour chauffer le fluide caloporteur (25), la pompe (23) étant reliée à une conduite d'alimentation (19) qui relie le ballon tampon (21) au collecteur solaire thermique (17), **caractérisé par le fait que** l'installation solaire (11) est partiellement remplie de fluide caloporteur (25), de sorte qu'une partie de l'installation solaire (11) est vide et que le fluide caloporteur (25) se déplace d'avant en arrière entre le collecteur solaire thermique (17) et le ballon tampon (21) via la conduite d'alimentation (19), en fonction de sa température, ce qui entraîne un fonctionnement oscillant.

2. Procédé selon la revendication 1, **caractérisé par le fait que** le fluide caloporteur (25) se trouve dans un premier état de fonctionnement essentiellement dans le ballon tampon (21) et dans un deuxième état de fonctionnement essentiellement dans le collecteur solaire thermique (17).

3. Procédé selon la revendication 2, **caractérisé par le fait que** le fluide caloporteur (25) est pompé avec la pompe (23) du premier état de fonctionnement au deuxième état de fonctionnement via la conduite d'alimentation (19).

4. Procédé selon la revendication 2 ou 3, **caractérisé par le fait que** le fluide caloporteur (25) passe du deuxième état de fonctionnement au premier état de fonctionnement par la vidange du collecteur solaire thermique (17) via la conduite d'alimentation (19).

5. Procédé selon l'une des revendications précédentes, **caractérisé par le fait que** le fluide caloporteur (25) est pompé, en fonction de sa température, par la conduite d'alimentation (19) jusque dans le collecteur solaire thermique (17) ou transféré via la conduite d'alimentation (19) dans le ballon tampon (21).

6. Procédé selon l'une des revendications 2 à 5, **caractérisé par le fait que** la pompe (23) est en contact avec le fluide caloporteur (25), indépendamment du premier et du deuxième état de fonctionnement.

7. Procédé selon l'une des revendications précédentes, **caractérisé par le fait que** le fluide caloporteur (25) est transféré du collecteur solaire thermique (17) vers le ballon tampon (21) via une conduite de dérivation (27) qui contourne la pompe (23).

8. Procédé selon l'une des revendications précédentes, **caractérisé par le fait que** le procédé est exempt d'un mouvement circulaire du fluide caloporteur (25) en faisant osciller le fluide caloporteur (25) d'avant en arrière par l'intermédiaire de la conduite d'alimentation (19) entre le collecteur solaire thermique (17) et le ballon tampon (21).

9. Procédé selon l'une des revendications précédentes, **caractérisé par le fait que** l'installation solaire à collecteur hybride (11) fonctionne sans pression.

10. Procédé selon l'une des revendications précédentes, **caractérisé par le fait qu'**un volume résiduel de fluide caloporteur (25) reste dans le ballon tampon (21) dans le deuxième état de fonctionnement.

11. Installation solaire à collecteur hybride (11) pour l'exécution du procédé selon les exigences 1 à 10, comprenant :
- un collecteur solaire thermique (17),
- un module photovoltaïque (15), où le module photovoltaïque (15) est disposé sur le collecteur solaire thermique (17) et où le module photovoltaïque (15) et le collecteur solaire thermique (17) forment ensemble un collecteur hybride (13),
- un fluide caloporteur (25) dans l'installation solaire (11),
- un ballon tampon (21) relié au collecteur hybride (13) par une conduite d'alimentation (19), et une pompe (23) reliée à la conduite d'alimentation (19), **caractérisé par le fait**
**que** la capacité de l'installation solaire (11) pour le fluide caloporteur (25) est au moins deux fois plus importante que le volume du fluide caloporteur (25).

12. Installation solaire selon la revendication 11, **caractérisée par le fait que** le volume de l'installation solaire (11), qui est exempte de fluide caloporteur (25), est rempli d'air.

13. Installation solaire selon la revendication 11 ou 12, **caractérisée par le fait que** le volume de remplissage du ballon tampon (21) est au moins égal au volume du fluide caloporteur chauffé (25).

14. Installation solaire selon l'une des revendications 11 à 13, **caractérisée par le fait que** le volume de remplissage du collecteur solaire thermique (17) ne dépasse pas le volume du fluide caloporteur refroidi (25).

15. Installation solaire selon l'une des revendications 11 à 14, **caractérisée par le fait que** le collecteur solaire thermique (17) est relié au ballon tampon (21) par la conduite d'alimentation (19) et une conduite de décharge (29).

16. Installation solaire selon l'une des revendications 11 à 15, **caractérisée par le fait que** le collecteur solaire thermique (17) s'autovidange.
